# EUROPEAN PATENT SPECIFICATION

(11) **EP 3 177 857 B1**
(45) Date of publication and mention of the grant of the patent: **29.08.2018**
(21) Application number: 15738936.2
(22) Date of filing: 21.07.2015
(51) Int. Cl.: F16K 1/30, F16K 35/02, F16K 31/60, F17C 13/04

(54) **LEVER ACTUATED CYLINDER VALVE ASSEMBLY**
HEBELBETÄTIGTE ZYLINDERVENTILANORDNUNG
ENSEMBLE VALVE DE BOUTEILLE ACTIONNÉ PAR LEVIER

(30) Priority: 05.08.2014 GB 201413813
(43) Date of publication of application: 14.06.2017
(73) Proprietor: Linde Aktiengesellschaft, 80331 München (DE)
(72) Inventor: HO, Lewis, St Ives Cambridgeshire PE27 4LG (GB)
(74) Representative: Richmond, Sarah
(86) International application number: PCT/EP2015/066626
(87) International publication number: WO 2016/020186

(56) References cited:
- DE-A1- 3 003 665
- FR-A- 936 022
- FR-A1- 2 793 297
- US-A- 2 280 615
- US-A- 5 009 249

## Description

The present invention relates to a lever actuated cylinder valve assembly. In particular, the invention relates to such an assembly which has a latch mechanism in order to securely retain the lever in a closed position.

Cylinder valve assemblies for gas cylinders and the like are well known. Traditionally, cylinder valves are provided with a hand wheel which is operable by rotation to open and close the valve. More recently, cylinder valves which use levers to operate the valve mechanism have become known. Such a cylinder valve assembly is disclosed in US 5 975 121.

Lever operated cylinder valves are advantageous as the speed at which the valve can be opened and closed is increased thus giving advantages to both the end user and operations (cylinder filling). In addition, unlike with a hand wheel, the position of the lever provides a visual indication of whether the valve is open (lever raised) or closed (lever lowered). However, because of the mechanical advantage provided by the lever, it is more easily possible to knock the lever and inadvertently open the valve. This can lead to a loss of material from within the cylinder which is wasteful and often dangerous, particularly in the case of flammable, explosive or noxious materials.

A number of documents propose mechanisms for retaining the lever in the closed position.

FR 2 793 297 discloses a first example with a lever projecting from the housing containing the valve body which is resiliently deformable such that, as the hook reaches the closed position, it deflects to one side whereupon the lever is retained behind the hook. The hook does not positively retain the lever in one position such that the lever is free to rattle during transit. Further, the hook projects to a significant extent from the housing and is required to be resiliently deformable. As such, it is a delicate component in a vulnerable position which is therefore prone to damage. There is also nothing to prevent the lever from striking the housing such that if a lever is closed with a higher than average force it will strike the housing which is noisy and potentially causes damage.

The second example of FR 2793297 provides a lever with a pair of resiliently deformable jaws which engage around a projection on the housing. It is not clear how this would be implemented in practice given that the lever is generally of a rigid material and the jaws are required to be deformable. It would therefore seem that these jaws would need to be part of a separate component which is attached to the lever. There is no disclosure of how this might be done. In practice, this is likely to be complex given the incompatibility between the material required for the lever and for the jaws. Further, the jaws are required to be reasonably flexible in order to deflect around the projection without requiring undue closing force. However, this makes them a weak component which is vulnerable to damage. Further, this mechanism proposes a relatively complex plunger arrangement around which the jaws engage which is embedded within the valve body. It is not clear how this can be created in practice as there will be considerable difficulty in inserting the components required for the valve body into the housing.

US 2,272,132 proposes a latching mechanism which is designed to hold a lever which is designed as a safety mechanism which will be released in the event of fire. The primary opening mechanism is via a hand wheel.

US 2002/0084282 discloses a simple construction in which the lever engaging member projects from the housing and is arranged to engage in a corresponding hole in the lever.
The lever engaging member consists of a pair of projections with hooks which will deform inwardly when the lever is closed. When the lever is opened, these are relatively flimsy components which are prone to damage. Further, the hole in the lever is provided with a shoulder which engages behind the hooks. Particularly when the lever is opened, this is likely to put undue pressure on the hooks potentially causing damage and therefore compromising their ability to latch.

US 2012/0261425 provides a spherical stud on the lever which engages with a receptacle in the housing. Whilst this is a simple mechanism, it appears to rely on an interference fit between the stud and receptacle in order to hold the lever in place. This will provide a weak clamping force.
Further, there is nothing which will prevent the stud from colliding with the housing if the lever is closed with undue force.

Therefore missing from the prior art is a robust mechanism which will firmly secure the lever in a position in which it will not rattle and which is easy to unlatch.

According to the present invention, there is provided a lever articulated cylinder valve assembly as recited in claim 1.

This arrangement provides a simple robust mechanism which provides a relatively high clamping force while being easy to release. By integrally forming the hook either with the valve body or the lever, this is made without requiring an additional component. The use of a spring which presents an elongate engagement portion to the hook provides a simple latch mechanism. The manually depressible release member ensures that a relatively high clamping force can be maintained on the lever, but that this can be readily overcome by depressing the release member when the user wishes to open the valve.

The use of the spring which presents an engagement portion to the hook provides a degree of damping in the event that the lever is closed with undue force as some energy will be absorbed in deflecting the spring. However, preferably, at least one damper is provided between the valve body and the lever.

In the unlatched position, the spring may be in its relaxed state. However, preferably, in the unlatched position it is biased by a biasing force. This ensures that it is reliably and consistently presented in the correct position so that it always meets the correct part of the hook.

The spring is preferably deflected from its unstressed position by the manner in which it is mounted to the valve body or lever. This deflection may be the same direction in which the engagement portion is displaced. However, if the spring is deflected in a different direction to provide the biasing effect, this reduces the amount of bending of the spring which is required to provide the necessary biasing force.

The release member may be any member which is manually depressible to lift the spring off the hook. Preferably, the face of the hook which receives the engagement portion in the latched position is inclined to present a ramp up which the engagement portion may be pushed by the release member to release the hook. The release member may be a slidable piston, but is preferably a pivotally mounted member that provides a mechanical advantage facilitating lifting of the spring. The release member may be mounted either in the hook or the valve body, but is preferably mounted in the same component that comprises the hook. Preferably the release member is positioned such that, in order to release the rod from the hook, it must be depressed below the level of the component which surrounds it. This means that it is unlikely to be accidentally released if the cylinder is dropped or knocked over as the force required to fully release the engagement portion is one which must be concentrated on the release member only.

The spring is preferably biased into the first position by the body of the valve body. The valve body is preferably surrounded by casework. Preferably it is the casework which biases the engagement portion to the unlatched position. It is relatively straightforward to arrange the casework such that it acts on the engagement portion directly and is therefore able to more reliably hold the spring in the correct position. By contrast, if the ends of the spring are mounted to the valve body, it is relatively difficult to bias the spring using the valve body as this is in contact only with the extremities of the spring making the biasing harder to achieve.

The valve assembly may be arranged such that an external force is required from the user on the lever in order to engage the hook with the engagement portion. However, preferably, the valve assembly is provided with a closure spring which biases the lever to an extent sufficient to latch the hook onto the engagement portion.

The spring may, for example, be a bent strip of material, a portion of which provides an engagement portion. This may, for example, be a bent wire, stamped metal sheet, injection moulded plastic, overmoulded plastic or other spring type.

Alternatively, the spring may be a plate, an edge of which forms the engagement portion. The edge may be an external edge of the plate such as an upturned lip, or an internal edge formed by one or more cutout portions in the plate.

An example of a lever actuated cylinder valve assembly in accordance with the present invention will now be described with reference to the accompanying drawings, in which:
Fig. 1 is a cross-section through the valve assembly with a lever and valve in the closed position;

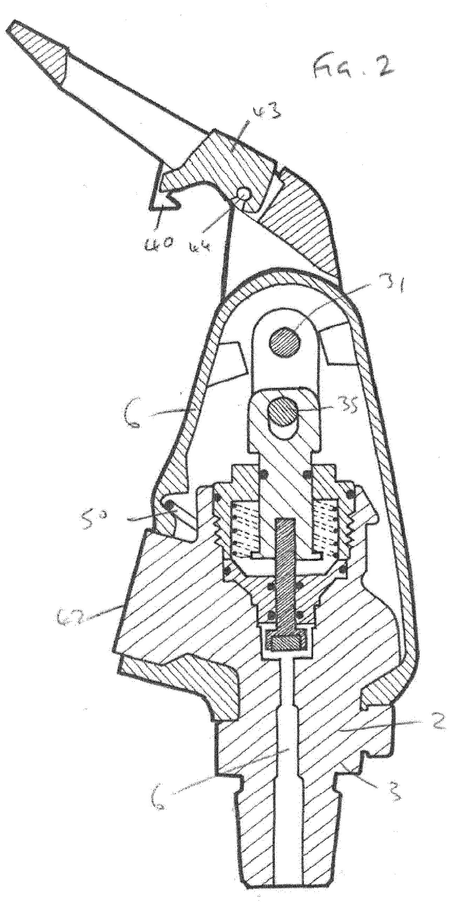

Fig. 2 is a similar view showing the valve mechanism in the fully open position;
Fig. 3 shows a portion of Fig. 1 showing the lever latching mechanism in greater detail;
Fig. 4 is a view similar to Fig. 3 showing the lever partially open;
Fig. 5 is a perspective view with certain parts shown in outline showing the lever in a closed position;
Figs. 6A-6D are perspective views showing various different types of spring; and
Fig. 7 is a perspective view showing a further type of spring.

The valve body 2 is typically cast from metal. Into this is screwed a valve housing 4 as described in greater detail below. All of this is covered by casework 6 which is typically moulded plastic which is a two-part housing which clips in place over the valve body 3.

The valve body 3 has a central axial gas outlet path 6 . Flow through the gas outlet path 6 is controlled by a valve element 7 which selectively blocks flow to a gas outlet port (not shown) in a manner well known in the art.

The pressurised gas path is sealed above the valve element 7 by an inner 9 and outer 10 high pressure O-ring seal.

Lifting the valve element 7 from its seat 11 selectively opens and closes the gas flow path out of the cylinder.

The mechanism for lifting the valve element 7 will now be described.

The valve element 7 is biased closed by a spring 15 the top end of which bears against a shoulder 16 in the valve housing 4 and the bottom of which bears against an annular flange 17 which forms part of the valve stem 18. As shown in the drawings, the valve stem 18 comprises a main stem 19 and a valve element retaining member 20 rigidly coupled to one another.

A lever 27 rotatable about a shaft 31 is provided to open the valve element 7 against the action of the spring 15.

The shaft 31 is coupled to an eccentric coupling which is connected at its lower end to a coupling pin 35 mounted in an elongate slot 39 in the main stem 19.

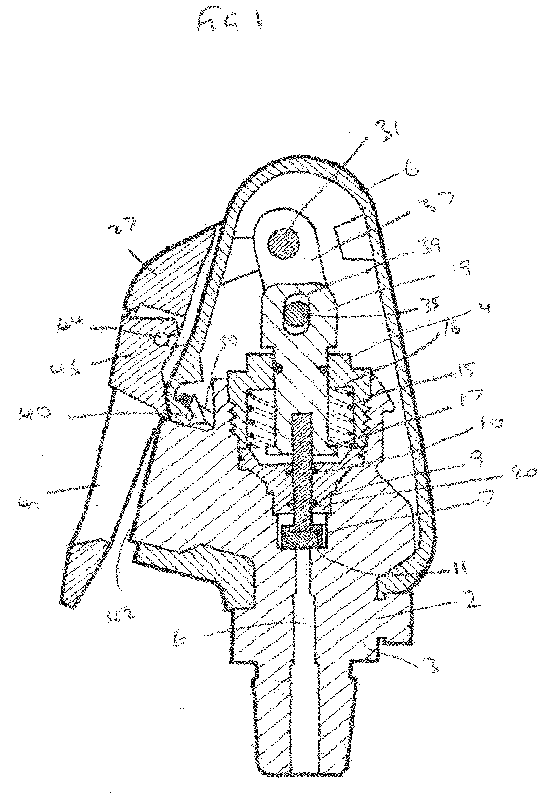

This provides a crank arrangement such that lifting the lever 27 from its at rest position shown in Fig. 1 initially lifts the pin 35 which picks up the main stem 19 and opens the valve.

The manner in which the lever 27 is retained in place will now be described.

The lever 27 is provided both with a pair of hooks 40, only one of which is visible in the drawings as these are a cross-section through a median plane. There is one such hook on either side of this plane. The lever 27 has a central opening 41 through which a gauge 42 can be viewed. Also in this opening is a release member 43 rotatable about a pivot 44 as described below.

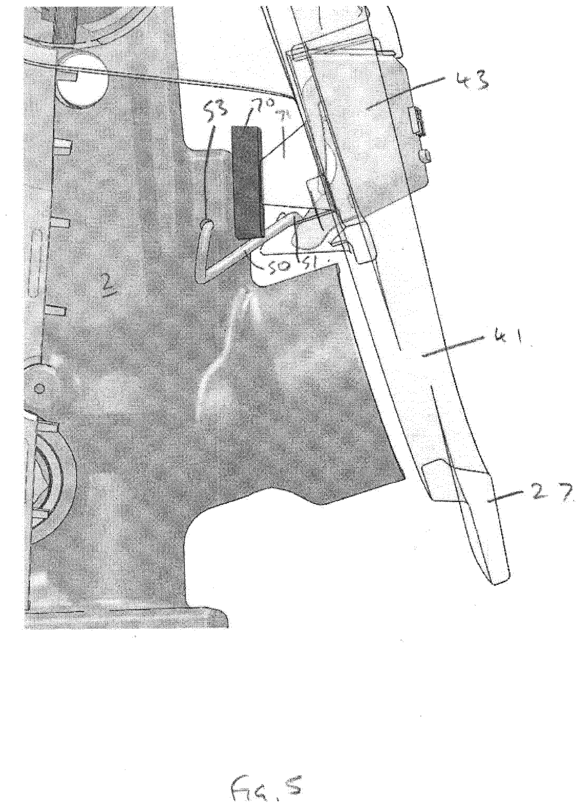

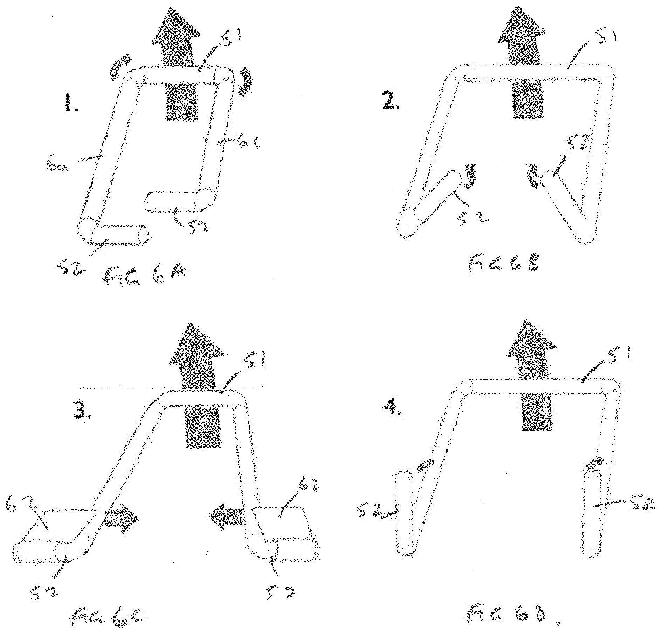

A spring 50 is mounted to the valve body 3 as described below and is arranged to receive the hooks 40 to latch the lever 27 in place. The spring 50 of this example is best shown in Fig. 5 which shows how one end of the spring is mounted to the body 2. This same spring is also shown in Fig. 6B. Effectively, the spring comprises a central bar 51 which is the part presented to the hooks 40 and with which the hooks 40 engage. The spring is bent such that it has end portions 52 which engage in openings 53 in the main body 2. In the example of Fig. 5 and 6B, the end portions 52 are inclined at an angle which is different from the angle of the openings 53 such that engagement of the spring within the valve body pre-stresses the spring.

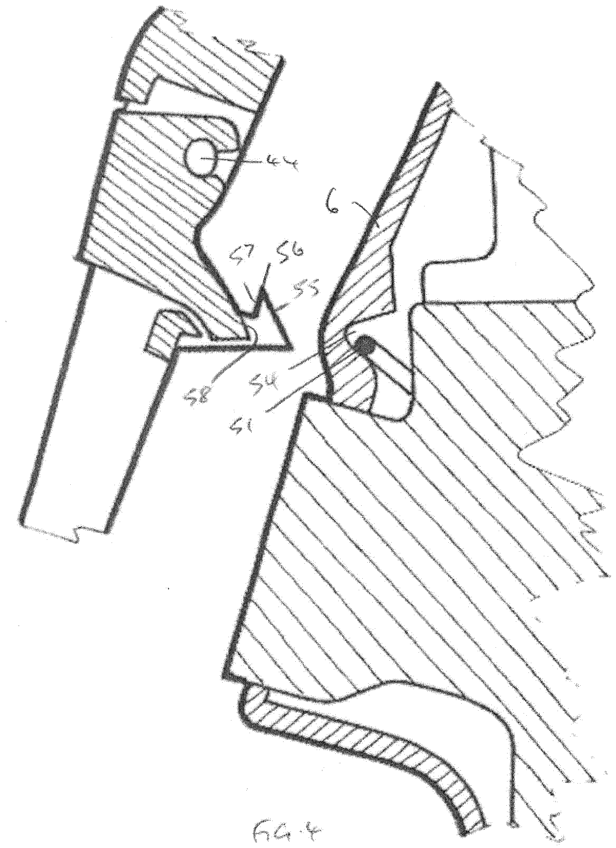

As is best seen in Fig. 4, the casework 6 has a recess 54 which engages beneath the bar 51 and lifts the bar 51 slightly above the position where it would always be in the absence of the casework. This generates a biasing force on the bar 51 and ensures that it is precisely located to receive the hooks 40. It will be appreciated that simply relying on the engagement between the end portions 52 of the spring with the holes 53 will not provide such reliable location of the bar 51 as the interaction is only at the ends of the spring and it is harder to manufacture the valve body with such precision as the casework making it harder to locate precisely.

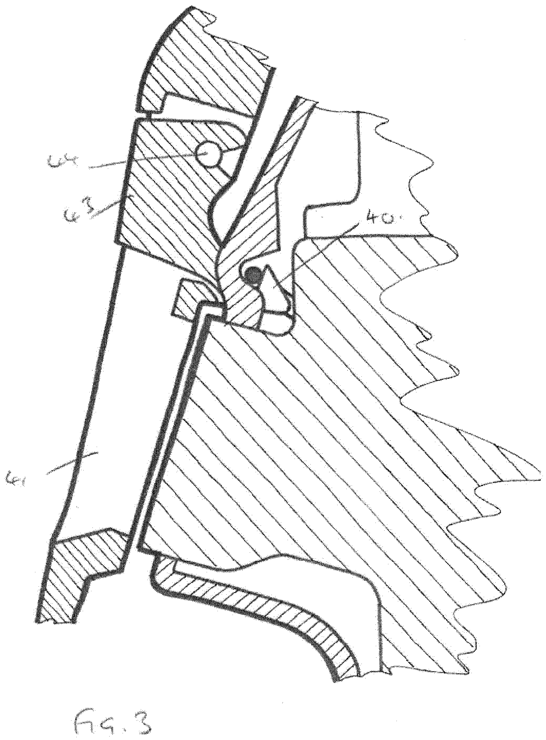

As the lever 27 is closed, ramped face 55 on the front of the hook picks up the bar 51 and lifts it over the apex 56 of the hook thereby resiliently biasing the bar 51 upwardly. Once over the apex 56, the resilience of the bar 51 causes it to ride down a ramped surface 57 on the opposite side of the hook once it reaches the position shown in Figs. 1 and 3. In this position, the previously mentioned biasing on the spring 50 ensures that it is biased into tight engagement with the hook 40, thereby firmly securing the lever 27 and preventing it from rattling.

In order to unlatch lever 27, the user presses the release member 43 pivoting it anti-clockwise about the pivot 44. This causes an inclined face 58 (best shown in Fig. 4) of the release member 43 to lift the bar 51 back up the ramped surface 57 and over the apex 56, whereupon the lever is released and the bar 51 can return to the unlatched position.

As will be appreciated, the lever is latched firmly in place and cannot readily be dislodged by accident. In order to release the lever, the force must be applied in a very specific location which is highly unlikely to happen when the cylinder is dropped or falls over. On the other hand, deliberate release of the lever can easily be achieved by depressing the release member.

A number of different spring configurations are shown in Figs. 6A-6D. In all cases, the springs have a bar 51 which is engaged by the hooks 40 and end portions 52 by which they are mounted to the casing.

Fig. 6A is a "carabiner" type clip spring. This has a longer arm 60 and a shorter arm 61. By displacing the ends of the spring, these unequal arms induce a torsion which tries to return the spring to the starting position.

The example of Fig. 6B has been described above. In this case, inserting the end portions 52 into the holes 53 that are angled to a greater extent than the arms 52, will provide the biasing force.

Fig. 6C shows a "bulldog" type clip spring. In this case, the two ends of the spring are displaced towards one another by their mounting. Blades 62 will urge the two sides of the spring closer to one another as the spring is displaced upwardly thereby generating an increased biasing force.

In Fig. 6D, the end portions 52 are bent in the same plane as the direction in which the bar 51 is displaced. Thus, when the bar is lifted, the spring will bend at the junction between the end portions 52 and the remainder of the spring. This generates a biasing force. This is a less preferred example as it requires a higher force to be displaced as the deformation is in the same direction as the displacement. This requires either a low stiffness material which will weaken the strength for the interlock or a higher stiffness material which will be stronger for the interlock, but will be harder to displace.

By contrast, the first three springs have a deformation that is not in the same direction as the displacement. This means that the spring can have a higher strength in the direction in which it is pulled when the lever is latched, but it can still have a low out-of-plane stiffness. In effect, this allows it to be made of thicker wire, thereby enhancing its robustness.

The spring alone may be configured to provide sufficient resilience to cushion the closing of the lever. However, as show in Fig. 5, damping members 70 may be provided on the valve body 3 and the lever 71 may be provided with corresponding lugs which engage with the damping members.

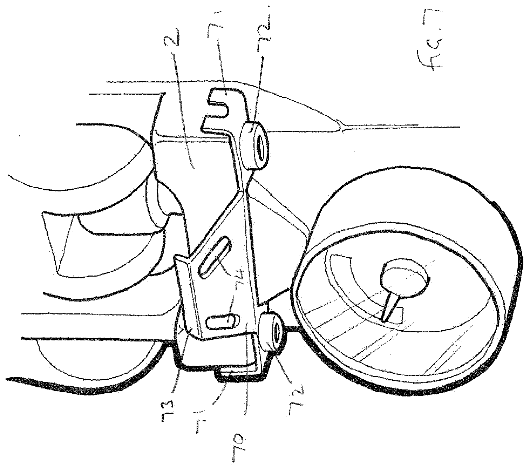

A further example is shown in Fig. 7. In this case, the spring formed of a bent rod of material has been replaced by a plate 70. As with the previous springs, the plate 70 is biased upwardly by casework (not shown in Fig. 7) so that it is precisely located to receive the hooks on the lever. The plate 70 has a pair of laterally extending arms 71 by which it is bolted to the body 2 by bolts 72. The edge of the plate furthest from the body 2 is bent up to form a lip 73 which is positioned to abut with the ramped face 55 of the hook when the lever is initially closed in the same manner as described above. The plate is provided with a pair of openings 74 (although a single large opening may alternatively be provided) to receive the hook. Thus, as the lever is closed, the ramped face 55 of the hook initially abuts against a lip 73, whereupon further movement of the lever lifts the plate upwardly allowing the hook to enter the openings 74 whereupon the resilience of the plate deflects it back downwards into engagement with the ramped surface 57 to provide the same tight engagement with the hook as previously described.

Other alternative configurations of the plate hook could be used. For example, if the lip 73 were to extend downwardly, rather than upwardly as in Fig. 7, the hook would latch behind this such that there would be no need for the openings 74.

Although the above mentioned example describes the hooks 40 and release member 43 as being on the lever 27 and the spring 50 as being on the valve body 3, it is equally possible for the hooks 40 to be integrally formed with the valve body 3 and for the spring 50 to be mounted on the lever 27. The release member 43 can be either on the component which has the hooks or on the component which has the springs providing that it is positioned to lift the bar 51 off the hooks 40.

## Claims

1. A lever actuated cylinder valve assembly comprising a valve body (2);
a lever (27) pivotally attached to the valve body (2) to operate a valve element (7);
a latch mechanism for retaining the lever (27) with respect to the valve body (2) when the lever (27) and valve element (7) are in a closed position; **characterised in that** the latch mechanism comprises a hook (40) integrally formed with one of the valve body (2) or lever (27) and a complementary spring (50) mounted on the other of the valve body (2) and lever (27), the spring (50) mounted so as to present an elongate engagement portion (51) to the hook (40), the spring (50) being in an unlatched position without the hook (40) engaged, the hook (40) being arranged to displace the spring (50) to ride up the hook (40) thereby increasing a biasing force of the spring (50), such that the engagement portion (51) passes over an apex (56) of the hook (40) and the spring (50) moves to a latched position in which it is biased into the hook (40) to hold the lever (27) closed; and wherein the valve assembly further comprises a release member (43) depressible by a user to lift the engagement portion (51) off the hook (40) to release the spring (50) from the hook (40).

2. A valve assembly according to claim 1, wherein at least one damper (70) is provided between the valve body (2) and the lever (27).

3. A valve assembly according to claim 1 or claim 2, wherein the spring (50) is biased while it is in the unlatched position.

4. A valve assembly according to claim 1 or claim 2, wherein the spring (50) is biased in the unlatched position in a different direction from the direction of movement of the engagement portion (51).

5. A valve assembly according to claim 3 or claim 4, wherein the valve body (2) is surrounded by casework (6) which biases the spring (50) to the unlatched position.

6. A valve assembly according to any one of the preceding claims, wherein the face (57) of the hook (40) which receives the engagement portion (51) in the latched position is inclined to present a ramp up which the engagement portion (51) may be pushed by the release member (43) to release the hook (40).

7. A valve assembly according to any one of the preceding claims, wherein the release member (43) is positioned such that, in order to release the engagement portion (51) from the hook (40), it must be depressed below the level of the component which surrounds it.

8. A valve assembly according to any one of the preceding claims, wherein the valve assembly is provided with a closure spring (15) which biases the lever (27) to an extent sufficient to latch the hook (40) onto the engagement portion (51).

9. A valve assembly according to any one of the preceding claims, wherein the spring (50) is a bent strip of material, a portion of which provides the engagement portion (51).

10. A valve according to any one of claims 1 to 8, wherein the spring (50) is a plate, an edge (73) of which forms the engagement portion.

## Patentansprüche

1. Hebelbetätigte Zylinderventilanordnung, umfassend einen Ventilkörper (2);
einen Hebel (27), der schwenkbar am Ventilkörper (2) angebracht ist, um ein Ventilelement (7) zu betreiben;
einen Verriegelungsmechanismus zum Halten des Hebels (27) in Bezug auf den Ventilkörper (2), wenn der Hebel (27) und das Ventilelement (7) in einer geschlossenen Position sind;
**dadurch gekennzeichnet, dass** der Verriegelungsmechanismus einen Haken (40), der einteilig mit einem von dem Ventilkörper (2) oder Hebel (27) gebildet ist, und eine komplementäre Feder (50), die an dem anderen von dem Ventilkörper (2) und Hebel (27) montiert ist, umfasst, wobei die Feder (50) derart montiert ist, dass sie einen länglichen Eingriffabschnitt (51) für den Haken (40) aufweist, wobei die Feder (50) in einer unverriegelten Position ist, ohne mit dem Haken (40) in Eingriff zu stehen, wobei der Haken (40) eingerichtet ist, die Feder (50) zu verschieben, um den Haken (40) aufwärts zu bewegen, wodurch eine Vorspannkraft der Feder (50) erhöht wird, so dass sich der Eingriffabschnitt (51) über einen Scheitel (56) des Hakens (40) bewegt, und sich die Feder (50) zu einer verriegelten Position bewegt, in der sie in den Haken (40) vorgespannt wird, um den Hebel (27) geschlossen zu halten; und
wobei die Ventilanordnung ferner ein Freigabeelement (43) umfasst, das von einem Bediener gedrückt werden kann, um den Eingriffabschnitt (51) von dem Haken (40) abzuheben, um die Feder (50) von dem Haken (40) freizugeben.

2. Ventilanordnung nach Anspruch 1,
wobei mindestens ein Dämpfer (70) zwischen dem Ventilkörper (2) und dem Hebel (27) bereitgestellt ist.

3. Ventilanordnung nach Anspruch 1 oder Anspruch 2,
wobei die Feder (50) vorgespannt ist, während sie in der unverriegelten Position ist.

4. Ventilanordnung nach Anspruch 1 oder Anspruch 2,
wobei die Feder (50) in der unverriegelten Position in einer anderen Richtung als der Bewegungsrichtung des Eingriffabschnitts (51) vorgespannt ist.

5. Ventilanordnung nach Anspruch 3 oder Anspruch 4,
wobei der Ventilkörper (2) von einem Gehäuse (6) umgeben ist, das die Feder (50) zu der unverriegelten Position vorspannt.

6. Ventilanordnung nach einem der vorhergehenden Ansprüche,
wobei die Fläche (57) des Hakens (40), der den Eingriffabschnitt (51) in der unverriegelten Position aufnimmt, geneigt ist, um eine Rampe aufzuweisen, wobei der Eingriffabschnitt (51) von dem Freigabeelement (43) an dieser aufwärts geschoben werden kann, um den Haken (40) freizugeben.

7. Ventilanordnung nach einem der vorhergehenden Ansprüche,
wobei das Freigabeelement (43) derart positioniert ist, dass es, um den Eingriffabschnitt (51) von dem Haken (40) freizugeben, unter die Ebene der Komponente, die es umgibt, gedrückt werden muss.

8. Ventilanordnung nach einem der vorhergehenden Ansprüche,
wobei die Ventilanordnung mit einer Schließfeder (15) versehen ist, die den Hebel (27) in einem Ausmaß vorspannt, das ausreichend ist, um den Haken (40) auf den Eingriffabschnitt (51) zu verriegeln.

9. Ventilanordnung nach einem der vorhergehenden Ansprüche,
wobei die Feder (50) ein gebogener Materialstreifen ist, von dem ein Abschnitt den Eingriffabschnitt (51) bereitstellt.

10. Ventilanordnung nach einem der Ansprüche 1 bis 8,
wobei die Feder (50) eine Platte ist, von der ein Rand (73) den Eingriffabschnitt bildet.

## Revendications

1. Ensemble de soupape de cylindre actionné par levier comprenant un corps de soupape (2);
un levier (27) attaché de façon pivotante au corps de soupape (2) pour actionner un élément de soupape (7) ;
un mécanisme de verrouillage pour retenir le levier (27) par rapport au corps de soupape (2) lorsque le levier (27) et l'élément de soupape (7) se trouvent dans une position fermée;
**caractérisé en ce que** le mécanisme de verrouillage comprend un crochet (40) intégralement formé avec un premier parmi le corps de soupape (2) ou le levier (27) et un ressort complémentaire (50) monté sur l'autre parmi le corps de soupape (2) et le levier (27), le ressort (50) étant monté de manière à présenter une partie d'engagement allongée (51) au crochet (40), le ressort (50) se trouvant dans une position déverrouillée sans le crochet (40) engagé, le crochet (40) étant agencé de manière à déplacer le ressort (50) afin de remonter le crochet (40), augmentant de ce fait une force de poussée du ressort (50), de telle sorte que la partie d'engagement (51) passe au-dessus d'un sommet (56) du crochet (40) et que le ressort (50) se déplace jusque dans une position verrouillée dans laquelle il est poussé dans le crochet (40) afin de maintenir le levier (27) fermé; et
dans lequel l'ensemble de soupape comprend en outre un élément de détente (43) enfonçable par un utilisateur afin de soulever la partie d'engagement (51) du crochet (40) dans le but de libérer le ressort (50) du crochet (40).

2. Ensemble de soupape selon la revendication 1, dans lequel au moins un amortisseur (70) est prévu entre le corps de soupape (2) et le levier (27).

3. Ensemble de soupape selon la revendication 1 ou la revendication 2, dans lequel le ressort (50) est poussé pendant qu'il se trouve dans la position déverrouillée.

4. Ensemble de soupape selon la revendication 1 ou la revendication 2, dans lequel le ressort (50) est poussé dans la position déverrouillée dans une direction différente de la direction de déplacement de la partie d'engagement (51).

5. Ensemble de soupape selon la revendication 3 ou la revendication 4, dans lequel le corps de soupape (2) est entouré par un coffrage (6) qui pousse le ressort (50) dans la position déverrouillée.

6. Ensemble de soupape selon l'une quelconque des revendications précédentes, dans lequel la face (57) du crochet (40) qui reçoit la partie d'engagement (51) dans la position verrouillée est inclinée pour présenter une rampe le long de laquelle la partie d'engagement (51) peut être poussée par l'élément de détente (43) pour libérer le crochet (40).

7. Ensemble de soupape selon l'une quelconque des revendications précédentes, dans lequel l'élément de détente (43) est positionné de telle sorte que, pour libérer la partie d'engagement (51) du crochet (40), il doive être enfoncé en dessous du niveau du composant qui l'entoure.

8. Ensemble de soupape selon l'une quelconque des revendications précédentes, dans lequel l'ensemble de soupape est pourvu d'un ressort de fermeture (15) qui pousse le levier (27) avec une ampleur suffisante pour verrouiller le crochet (40) sur la partie d'engagement (51) .

9. Ensemble de soupape selon l'une quelconque des revendications précédentes, dans lequel le ressort (50) est une bande de matériau courbe, dont une partie constitue la partie d'engagement (51).

10. Soupape selon l'une quelconque des revendications 1 à 8, dans laquelle le ressort (50) est une plaque, dont un bord (73) forme la partie d'engagement.
